# EUROPÄISCHE PATENTANMELDUNG

(11) **EP 4 446 775 A2**
(43) Veröffentlichungstag der Anmeldung: **16.10.2024**
(21) Anmeldenummer: 24168815.9
(22) Anmeldetag: 05.04.2024
(51) Int. Cl.: G01S 7/481, G01S 17/10, G01S 17/88, G02B 7/182, G02B 26/10, G06F 3/01

(54) **OPTISCHER SCANNER UND VERFAHREN ZUM NACHWEISEN VON OBJEKTEN IN EINEM ÜBERWACHUNGSBEREICH**

(30) Priorität: 13.04.2023 DE 102023109332
(71) Anmelder: Pepperl+Fuchs SE, 68307 Mannheim (DE)
(72) Erfinder: TABEL, Ernst, 68307 Mannheim (DE); WEBER, Hinrik, 68307 Mannheim (DE); SCHROEDER, Thorsten, 68307 Mannheim (DE)
(74) Vertreter: Schiffer, Axel Martin

(57) **Zusammenfassung**

Die Erfindung betrifft einen optischen Scanner nach dem Laufzeitprinzip mit einem Lichtsender zum Aussenden eines gepulsten Sendelichtstrahls in einen Überwachungsbereich, mit einem Rotor, auf dem der Lichtsender zum Drehen des Sendelichtstrahls angeordnet ist, mit einem Stator relativ zu dem der Rotor um eine Drehachse drehbar ist, mit einem auf dem Rotor angeordneten Detektor zum Nachweisen von von einem Objekt im Überwachungsbereich zurückgestrahlten Lichtpulsen und mit einer Steuer- und Auswerteeinheit, die eingerichtet ist zum Ansteuern des Lichtsenders und zum Ermitteln einer Laufzeit von von dem Detektor nachgewiesenen Lichtpulsen und zum Bestimmen eines Objektabstands des Objekts relativ zu dem optischen Scanner aufgrund der Laufzeit von bei einer bestimmten Drehstellung des Sendelichtstrahls nachgewiesenen Lichtpulsen. Der optische Scanner ist dadurch gekennzeichnet, dass auf dem Rotor ein verschwenkbarer mikromechanischer Spiegel angeordnet ist, über den der Sendelichtstrahl in den Überwachungsbereich geleitet wird, dass der mikromechanische Spiegel zum Variieren eines Winkels des Sendelichtstrahls relativ zu der Drehachse des Rotors eingerichtet ist und dass die Steuer- und Auswerteeinheit zum Auslesen einer Winkelstellung des mikromechanischen Spiegels eingerichtet ist. Die Erfindung betrifft außerdem ein Verfahren zum Nachweisen von Objekten in einem Überwachungsbereich.

## Beschreibung

Die vorliegende Erfindung betrifft in einem ersten Gesichtspunkt einen optischen Scanner zum Nachweisen von Objekten in einem Überwachungsbereich nach dem Oberbegriff des Anspruchs 1 und in einem zweiten Gesichtspunkt ein Verfahren zum Nachweisen von Objekten in einem Überwachungsbereich nach dem Oberbegriff des Anspruchs 14.

Ein gattungsgemäßer optischer Scanner nach dem Laufzeitprinzip zum Nachweisen von Objekten in einem Überwachungsbereich umfasst folgende Bestandteile: einen Lichtsender zum Aussenden eines gepulsten Sendelichtstrahls in den Überwachungsbereich, einen Rotor, auf dem der Lichtsender zum Drehen des Sendelichtstrahls angeordnet ist, einen Stator relativ zu dem der Rotor um eine Drehachse drehbar ist, einen auf dem Rotor angeordneten Detektor zum Nachweisen von von einem Objekt im Überwachungsbereich zurückgestrahlten Lichtpulsen und eine Steuer- und Auswerteeinheit, die eingerichtet ist zum Ansteuern des Lichtsenders, zum Ermitteln einer Laufzeit von von dem Detektor nachgewiesenen Lichtpulsen und zum Bestimmen eines Objektabstands des Objekts relativ zu dem optischen Scanner aufgrund der Laufzeit von bei einer bestimmten Drehstellung des Sendelichtstrahls nachgewiesenen Lichtpulsen.

Bei einem gattungsgemäßen Verfahren zum Nachweisen von Objekten in einem Überwachungsbereich mit einem optischen Scanner werden folgende Verfahrensschritte durchgeführt: ein gepulster Sendelichtstrahl wird in den Überwachungsbereich gestrahlt und von einem Objekt im Überwachungsbereich zurückgestrahlte Lichtpulse werden nachgewiesen, eine Senderichtung des Sendelichtstrahls wird um eine Drehachse verschwenkt, eine Laufzeit von nachgewiesenen Lichtpulsen wird ermittelt und aus der Laufzeit von Lichtpulsen, die bei einer momentanen Drehstellung des Sendelichtstrahls nachgewiesen werden, wird ein Objektabstand des Objekts im Überwachungsbereich relativ zu dem optischen Scanner bestimmt.

Solche Scanner und Verfahren sind beispielsweise aus WO 2012/163515 A1 bekannt.

Eine Eigenschaft der gattungsgemäßen Scanner und Verfahren ist, dass nur eine Ebene im Überwachungsbereich, nämlich diejenige Ebene, in welcher der Sendestrahl verschwenkt wird, überwacht wird. Mithin wird im wesentlichen nur ein zweidimensionaler Bereich überwacht. Zur Überwachung von dreidimensionalen Überwachungsbereichen ist es , beispielsweise aus US 2010/03025281 A1 bekannt, den beschriebenen Messaufbau mehrfach auf einem Rotor in unterschiedlichen Höhen anzuordnen. Diese Lösung beansprucht vergleichsweise viel Bauraum und ist auch sonst aufwändig.

Als eine Aufgabe der Erfindung kann angesehen werden, einen optischen Scanner und ein Verfahren bereitzustellen, die die Überwachung eines vergrößerten Raumbereichs ermöglichen und mit im Vergleich zum Stand der Technik reduziertem Aufwand verwirklicht werden können.

Diese Aufgabe wird durch den optischen Scanner mit den Merkmalen des Anspruchs 1 und durch das Verfahren mit den Merkmalen des Anspruchs 14 gelöst.

Der optische Scanner der oben angegebenen Art ist erfindungsgemäß dadurch weitergebildet, dass auf dem Rotor ein verschwenkbarer mikromechanischer Spiegel angeordnet ist, über den der Sendelichtstrahl in den Überwachungsbereich geleitet wird, dass der mikromechanische Spiegel zum Variieren eines Winkels des Sendelichtstrahls relativ zu der Drehachse des Rotors eingerichtet ist und dass die Steuer- und Auswerteeinheit zum Auslesen einer Winkelstellung des mikromechanischen Spiegels eingerichtet ist.

Das Verfahren der oben angegebenen Art ist erfindungsgemäß dadurch weitergebildet, dass die Richtung des Sendelichtstrahls relativ zur Drehachse mit einem mikromechanischen Spiegel, über den der Sendelichtstrahl in den Überwachungsbereich geleitet wird, verschwenkt wird und dass ein momentaner Winkel des Sendelichtstrahls relativ zu Drehachse ausgelesen und dem Objektabstand und der Drehstellung des Sendelichtstrahls zugeordnet wird.

Vorteilhafte Ausgestaltungen des erfindungsgemäßen optischen Scanners und bevorzugte Varianten des erfindungsgemäßen Verfahrens werden im Folgenden, insbesondere im Zusammenhang mit den abhängigen Ansprüchen und den Figuren erläutert.

Die Begriffe Sendestrahl und Sendelichtstrahl werden in dieser Anmeldung synonym verwendet.

Als Lichtsender werden üblicherweise Halbleiterlichtquellen, insbesondere Halbleiterlaser, insbesondere im Infrarotbereich, verwendet. Grundsätzlich können auch Lichtsender im sichtbaren Bereich und im UV-Bereich verwendet werden. Als Detektoren werden in aller Regel ebenfalls Halbleiterdetektoren, beispielsweise, CCD, CMOS, SPAD, Detektoren verwendet.

Im Hinblick auf die Technologie der Anordnung von Sender und Detektor auf einem Rotor wird auf den oben angegebenen Stand der Technik und Referenzen darin verwiesen.

Als Grundidee der vorliegenden Erfindung kann erachtet werden, anstelle einer Vervielfältigung von Anordnungen, die nur eine einzige Ebene abtasten, den Lichtstrahl um einen zweiten Winkel verschwenkbar zu gestalten. Damit sind dreidimensionale Aufnahmen des Überwachungsbereichs möglich.

Ein wesentlicher Vorteil der Erfindung ist, dass ein im Vergleich zum Stand der Technik deutlich einfacherer und insbesondere ein in einem kleineren Volumen zu realisierender Aufbau verwirklicht wird.

Der Rotor kann grundsätzlich um Winkelbereiche von kleiner als 360°, insbesondere periodisch, hin und her gedreht werden. Besonders bevorzugt wird der Rotor aber, insbesondere kontinuierlich, um 360° drehend betrieben.

Unter dem Begriff des mikromechanischen Spiegels werden insbesondere MEMS Micro-Electro-Mechanical Systems)-Spiegel verstanden.

Der mikromechanische Spiegel kann ansteuerbar sein und die Steuer- und Auswerteeinheit kann zum Ansteuern des mikromechanischen Spiegels eingerichtet sein. Ein weiterer Vorteil der Erfindung ist, dass zu deren Verwirklichung ein einachsig verschwenkbarer mikromechanischer Spiegel ausreichend ist. Es kann aber auch ein zweiachsiger mikromechanische Spiegel verwendet werden.

Der mikromechanische Spiegel kann quasistatisch, periodisch schwingend und/oder resonant schwingend betreibbar sein.

Grundsätzlich kann ein an den mikromechanischen Spiegel gegebenes Steuersignal als Signal gewertet werden, welches eine aktuelle Winkelstellung des mikromechanischen Spiegels angibt. Bevorzugt weist der mikromechanische Spiegel aber einen internen Positionssensor auf, der eine momentane Winkelstellung des mikromechanischen Spiegels ausgibt. Die momentane Winkelstellung des mikromechanischen Spiegels kann auch als Ist-Winkelstellung bezeichnet werden. Solch ein interner Positionssensor wird typischerweise mit einem an den mikromechanischen Spiegel mechanisch gekoppelten Piezosensor verwirklicht.

Bei bevorzugten Ausgestaltungen kann der mikromechanische Spiegel über einen Winkelhub von mindestens 30°, insbesondere von 40°, besonders bevorzugt von 50° oder darüber verschwenkbar sein.

Die Bewegung des mikromechanischen Spiegels kann mit der Rotation des Rotors synchronisiert sein und die Steuer- und Auswerteeinheit kann zur synchronisierten Ansteuerung des Rotors und des mikromechanischen Spiegels eingerichtet sein. Dieses ist bevorzugt, wenn, was weiter unten im Einzelnen beschrieben wird, ein Pilotlaser zur optischen Darstellung von Informationen auf einem Objekt im Überwachungsbereich verwendet wird.

Wenn ein Verhältnis einer Umlauffrequenz des Rotors zu einer Schwingungsfrequenz des verschwenkbaren mikromechanischen Spiegels so geartet ist, dass eine Trajektorie von im Überwachungsbereich beleuchteten Punkten nach einer gewissen Anzahl von Umläufen des Rotors wieder auf sich selbst zu liegen kommt, spricht man davon, dass das Verhältnis der Umlauffrequenz des Rotors zur Schwingungsfrequenz des mikromechanischen Spiegels kommensurabel ist.

Ist dieses nicht der Fall, kommt die Trajektorie von im Überwachungsbereich beleuchteten Punkten also nie wieder genau auf sich selbst zu liegen, wird das Verhältnis der Umlauffrequenz des Rotors zur Schwingungsfrequenz des mikromechanischen Spiegels als nicht kommensurabel bezeichnet. In diesem Fall wird der Überwachungsbereich beliebig dicht abgetastet. Allerdings wird diese dichte Abtastung gegebenenfalls erst nach langen Messzeiten erreicht.

In der Praxis wird man für einen synchronisierten Betrieb in der Regel ein gewisses ganzzahliges und mithin kommensurables Verhältnis der Umlauffrequenz des Rotors zur Schwingungsfrequenz des mikromechanischen Spiegels wählen, bei dem der Überwachungsbereich in einer hinreichend kurzen Zeit hinreichend dicht abgetastet wird.

Für Verwendungszwecke, bei denen es primär auf die Detektion von Objekten im Überwachungsbereich ankommt, kann es aber bevorzugt sein, dass eine Bewegung des mikromechanischen Spiegels mit der Rotation des Rotors nicht synchronisiert ist. Der Aufwand für das Steuern und gegebenenfalls das Regeln eines synchronisierten Betriebs des Rotors und des mikromechanischen Spiegels ist dann nicht notwendig.

Bevorzugt kann der mikromechanische Spiegel in einem Modus betrieben werden, in dem er resonant schwingt. Einzelheiten dazu werden weiter unten im Zusammenhang mit dem getakteten Betrieb des optischen Scanners beschrieben.

Die Drehfrequenzen des Rotors betragen typischerweise 50-100 Hz. Die Lichtpulse werden typischerweise mit Raten von einigen 100 kHz, beispielsweise etwa 300 kHz, ausgesendet. Wie das Verhältnis der Schwingungsfrequenz des mikromechanischen Spiegels relativ zur Umlauffrequenz des Rotors gewählt wird, hängt im Einzelnen von der jeweiligen Messaufgabe ab. Bei bevorzugten Varianten ist eine Schwingungsfrequenz des mikromechanischen Spiegels um einen Faktor 10 bis 1000, insbesondere um einen Faktor 20 bis 500 und besonders bevorzugt um einen Faktor 40 bis 200, größer als eine Umlauffrequenz des Rotors.

Der mikromechanische Spiegel kann grundsätzlich an irgendeiner Position auf dem Rotor montiert sein. Im Hinblick auf die Auswuchtung des Rotors ist es aber bevorzugt, wenn der mikromechanische Spiegel auf der Drehachse des Rotors montiert ist.

Insbesondere kann es zweckmäßig sein, wenn die Drehachse des mikromechanischen Spiegels die Drehachse des Rotors schneidet.

Grundsätzlich kann die Drehachse des mikromechanischen Spiegels in irgendeinem Winkel zur Drehachse des Rotors orientiert sein. Bevorzugt ist die Drehachse des mikromechanischen Spiegels aber senkrecht zur Drehachse des Rotors orientiert. Wenn sich die Drehachse des verschwenkbaren Spiegels und die Drehachse des Rotors nicht schneiden, kann eine zur Drehachse des Spiegels parallele Gerade die Drehachse des Rotors senkrecht schneiden.

Das Winkelintervall, über welches die Senderichtung mit dem mikromechanischen Spiegel verschwenkt werden kann, kann grundsätzlich beliebig relativ zur Drehachse des Rotors orientiert sein. Bei bevorzugten Varianten ist der mikromechanische Spiegel aber so montiert, dass das Winkelintervall, über welches die Senderichtung verschwenkbar ist, mindestens näherungsweise symmetrisch liegt zu einer zur Drehachse des Rotors senkrechten Richtung, oder, mit anderen Worten, mindestens näherungsweise symmetrisch liegt zur Drehebene des Rotors. Die Drehebene ist hier eine zur der Drehachse des Rotors senkrechte Ebene, und insbesondere eine Ebene, in der die Drehachse des mikromechanischen Spiegels liegt.

Bei besonderen Anwendungsfällen, die weiter unten beschrieben werden, kann es aber auch bevorzugt sein, wenn der mikromechanische Spiegel gezielt nur über ein reduziertes Winkelintervall verschwenkt wird, welches dann nicht notwendig symmetrisch zur Drehebene liegen muss.

Die Senderichtung des Lichtsenders kann grundsätzlich in einer beliebigen Richtung relativ zur Drehachse des Rotors orientiert sein. Wichtig für die Verwirklichung der Erfindung ist primär, dass der Sender relativ zu dem mikromechanischen Spiegel geeignet ausgerichtet ist. Bevorzugt ist der Lichtsender so auf dem Rotor montiert, dass eine Senderichtung des Lichtsenders koaxial zur Drehachse des Rotors verläuft. Dieses hat wiederum Vorteile im Hinblick auf die Auswuchtung des Rotors.

Für ein gutes Signal- zu Rausch-Verhältnis kommt es darauf an, aus dem Überwachungsbereich zurückgestrahltes Licht möglichst effektiv nachzuweisen. Unter diesem Gesichtspunkt ist es bevorzugt, wenn zum Bündeln von aus dem Überwachungsbereich zurückgestrahltem Licht auf den Detektor eine lichtsammelnde Optik vorhanden ist. Beispielsweise kann die lichtsammelnde Optik mindestens eine Sammellinse, mindestens einen Hohlspiegel, mindestens eine Fresnellinse und/oder mindestens eine holographische Linse aufweisen.

Grundsätzlich reicht es aus, wenn der Detektor nur ein einziges Detektorsegment aufweist. Es kann aber bevorzugt sein, wenn der Detektor mehrere Detektorsegmente aufweist, die separat auslesbar sind. Wenn dann nur das Detektionssignal derjenigen Detektorsegmente berücksichtigt wird, bei denen das Detektionssignal über einer festzulegenden Schwelle liegt, kann im Vergleich zur Auswertung aller Segmente ein besseres Signal- zu Rausch-Verhältnis erreicht werden.

Weitere Verbesserungen des Signal- zu Rausch-Verhältnisses sind möglich, wenn ein Eintrag von Streulicht in den Detektionsstrahlengang möglichst reduziert wird. Unter diesem Gesichtspunkt ist es bevorzugt, wenn zum optischen Trennen eines Sendestrahlengangs und eines Detektionsstrahlengangs eine für das Sendelicht undurchlässige Platte vorhanden ist. Die undurchlässige Platte kann zwischen dem Lichtsender und dem Detektor angeordnet sein.

Bei einem weiteren bevorzugten Ausführungsbeispiel ist die undurchlässige Platte an einem Kunststoffformteil angeformt, in dem der Lichtsender, der Detektor und der mikromechanische Spiegel aufgenommen sind. Dadurch werden Vorteile bei der Montage des optischen Scanners erreicht. Auch die lichtsammelnde Optik kann in dem Kunststoffformteil aufgenommen sein oder durch das Kunststoffformteil gebildet sein.

Die Steuer- und Auswerteeinheit kann dazu eingerichtet sein, eine momentane Drehstellung des Rotors auszulesen. Beispielsweise kann zum Messen einer Drehstellung des Rotors ein inkrementeller optischer Drehgeber vorhanden sein. Bei einem weiteren bevorzugten Ausführungsbeispiel ist die Steuer- und Auswerteeinheit für einen getakteten Betrieb eingerichtet, wobei pro Takt mindestens eine Messung eines Objektabstands durchgeführt wird und wobei die Resultate der mindestens einen Abstandsmessung für jeden Takt gemeinsam mit einer zum jeweiligen Zeitpunkt ausgelesenen Winkelposition des mikromechanischen Spiegels und einer zu diesem Zeitpunkt ausgelesenen Drehstellung des Rotors in einem Bildspeicher abgespeichert werden.

Bei einer bevorzugten Variante des erfindungsgemäßen Verfahrens wird der optische Scanner getaktet betrieben, wobei pro Takt mindestens eine Messung eines Objektabstands durchgeführt wird und die Resultate der mindestens einen Abstandsmessung werden für jeden Takt gemeinsam mit einer zum jeweiligen Zeitpunkt ausgelesenen Winkelposition des mikromechanischen Spiegels und einer zu diesem Zeitpunkt ausgelesenen Drehstellung des Rotors in einem Bildspeicher abgespeichert.

Bevorzugt werden mehrere, beispielsweise fünf bis zehn, Abstandsmessungen pro Takt durchgeführt und es wird ein Mittelwert der aus den Abstandsmessungen ermittelten Objektabstände gebildet und abgespeichert.

Für den getakteten Modus müssen vorteilhaft der Rotor und der mikromechanische Spiegel nicht synchronisiert betrieben werden.

Eine besonders bevorzugte Variante des erfindungsgemäßen Verfahrens ist dadurch gekennzeichnet, dass ein Intervall der Winkel, über den der mikromechanische Spiegel hin und her verschwenkt wird, mindestens phasenweise kleiner ist als ein maximal möglicher Winkelhub des mikromechanischen Spiegels und dass eine Lage dieses Intervalls innerhalb des maximal möglichen Winkelhubs eingestellt wird.

Vorteilhaft kann in einer ersten Verfahrensphase das Intervall auf einen ersten Wert eingestellt und in einer zweiten Verfahrensphase auf einen zweiten Wert eingestellt werden, der kleiner ist als der erste Wert. Der erste Wert des Intervalls kann der mit dem mikromechanischen Spiegel maximal mögliche Winkelhub sein.

Diese Verfahrensvarianten ermöglichen es beispielsweise, in einem schnellen Scan den Überwachungsbereich abzutasten und sinngemäß erst einmal nachzusehen, wo im Überwachungsbereich sich ein Objekt befindet. In der zweiten Verfahrensphase kann dann der Bereich, in dem in der ersten Verfahrensphase ein Objekt gefunden wurde, genauer betrachtet werden. Bevorzugt wird eine Rate, mit der die Lichtpulse ausgesendet werden, nicht geändert, bleibt also konstant. Der kleinere Bereich wird dann mit einer entsprechend höheren örtlichen Auflösung abgetastet.

Alternativ oder ergänzend können auch eine Schwingungsfrequenz, mit welcher der mikromechanischer Spiegel betrieben wird und/oder eine Messdauer in Abhängigkeit des Intervalls, über welches der mikromechanischer Spiegel hin und her schwingt, angepasst werden. Die räumliche Auflösung wird durch die Parameter Schwingungsfrequenz des mikromechanischen Spiegels und Messdauer ebenfalls beeinflusst.

Bevorzugt wird die Rate, mit der die Lichtpulse ausgesendet werden, konstant und insbesondere auf einem maximal möglichen Wert belassen.

Die Größe des zweiten Werts des Winkelintervalls in der zweiten Verfahrensphase und dessen Lage innerhalb des maximal möglichen Winkelhubs können also zweckmäßig in Abhängigkeit von Messdaten des optischen Scanners eingestellt werden, die in der ersten Verfahrensphase gewonnen wurden.

Bei einer weiteren vorteilhaften Ausgestaltung des erfindungsgemäßen optischen Scanners ist zum optischen Darstellen von Information auf einem Objekt im Überwachungsbereich ein Pilotlaser vorhanden, der im sichtbaren Bereich emittiert. Bevorzugt ist der Pilotlaser auf dem Rotor angeordnet und die Steuer- und Auswerteeinheit ist zum Ansteuern des Pilotlasers eingerichtet.

Das Licht des Pilotlasers kann ebenfalls über den mikromechanischen Spiegel oder einen weiteren verschwenkbaren, insbesondere mikromechanischen, Spiegel, der separat ansteuerbar ist, in den Überwachungsbereich gestrahlt werden.

Grundsätzlich ist es möglich, dass der Sendelichtstrahl und der Sendestrahlengang des Pilotlasers im Überwachungsbereich auseinanderfallen. Besonders bevorzugt verläuft ein Sendestrahlengang des Pilotlasers im Überwachungsbereich aber kollinear mit dem Sendelichtstrahl. Beispielsweise kann das Licht des Pilotlasers mit einem Strahlteiler in den Sendestrahlengang eingekoppelt werden.

Zweckmäßig ist die Steuer- und Auswerteeinheit dazu eingerichtet, durch geeignete zeitliche Ansteuerung des Pilotlasers Symbole, insbesondere Schriftzeichen und Ziffern, auf einem Objekt im Überwachungsbereich zu generieren.

Zum optischen Darstellen von Symbolen auf einem Objekt im Überwachungsbereich muss der Pilotlaser wiederholend zu geeigneten Zeitpunkten angesteuert werden.

Beispielsweise muss der Pilotlaser zur Darstellung eines Punkts auf einem Objekt immer dann für eine kurze Zeit zur Abstrahlung von Licht angesteuert werden, wenn der Pilotlaser durch den Rotor und den mikromechanischen Spiegel auf eben diesen Punkt ausgerichtet ist. Dieses entspricht im Wesentlichen dem Prinzip eines Stroboskops.

Um eine für das menschliche Auge kontinuierliche Darstellung zu erreichen, sollte eine Frequenz, mit welcher ein und derselbe Punkt auf dem Objekt im Überwachungsbereich wiederholend mit dem Pilotlaser beleuchtet wird, größer sein als die Flimmerfusionsfrequenz für das menschliche Auge. Die Flimmerfusionsfrequenz für das menschliche Auge beträgt einige 10 Hz.

Komplexere Objekte oder Symbole können dann aus einzelnen zu beleuchtenden Punkten zusammengesetzt werden.

Besonders bevorzugt werden auf dem Objekt im Überwachungsbereich mit dem Pilotlaser Bereiche für einen Benutzer signalisiert, die von dem optischen Scanner zu dessen Steuerung über Gesten des Benutzers, insbesondere mit einer Hand des Benutzers, überwacht werden.

Alternativ oder ergänzend können mit dem Pilotlaser Bereiche auf dem Objekt signalisiert werden, in denen Messdaten des optischen Scanners von Erwartungswerten abweichen. Dabei können beispielsweise eine Qualität und/oder eine Quantität einer Abweichung von einer Erwartungshaltung signalisiert werden.

Schließlich ist es auch möglich, mit dem Pilotlaser Messdaten des optischen Scanners, die für ein Objekt im Überwachungsbereich momentan erhalten werden, auf diesem Objekt darzustellen.

Der erfindungsgemäße optische Scanner ist besonders bevorzugt zum Durchführen der erfindungsgemäßen Verfahren eingerichtet. Dies betrifft insbesondere die Steuer- und Auswerteeinheit und die von dieser angesteuerten und/oder ausgelesenen Komponenten, also die Ansteuerung des Senders, des mikromechanischen Spiegels, des Pilotlasers, das Auslesen der Ist-Position des mikromechanischen Spiegels, das Auslesen einer Winkelstellung des Rotors und das Auslesen und Auswerten der Signale des Detektors.

Weitere Vorteile und Eigenschaften des erfindungsgemäßen optischen Scanners und des erfindungsgemäßen Verfahrens werden im Folgenden im Zusammenhang mit den Figuren erläutert. Darin zeigt:
- Figur 1:: eine schematische Seitenansicht eines erfindungsgemäßen optischen Scanners in einer typischen Messsituation;
- Figur 2:: eine schematische Teilansicht von oben auf den optischen Scanner aus Figur 1, und
- Figur 3:: eine schematische Ansicht von typischen Trajektorien des Sendestrahls in einem Winkelbereich.

Gleiche und gleichwirkende Komponenten sind in den Figuren in der Regel mit denselben Bezugszeichen gekennzeichnet.

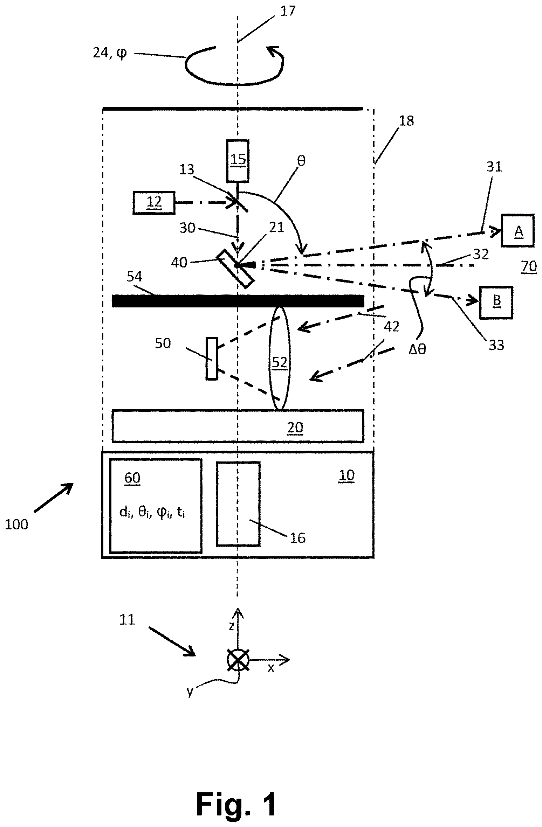

Der in Figur 1 schematisch dargestellte erfindungsgemäße optische Scanner 100 weist erfindungsgemäß einen Stator 10 und einen Rotor 20 auf, der relativ zu dem Stator 10 um eine Drehachse 17 drehbar ist. Auf dem Rotor 20 sind ein Lichtsender 15 und ein Detektor 50 angeordnet. Der Lichtsender 15 dient zum Aussenden eines gepulsten Sendelichtstrahls 30 in einen Überwachungsbereich 70. Der Rotor 20 dient zum Drehen des Sendelichtstrahls 30 um die Achse 17 und somit zum Abtasten des Überwachungsbereichs 70. Der Detektor 50 dient zum Nachweisen von Lichtpulsen 42, die von einem Objekt A, B im Überwachungsbereich 70 zurückgestrahlt werden.

Sodann umfasst der optische Scanner 100 erfindungsgemäß eine Steuer- und Auswerteeinheit 60 zum Ansteuern des Lichtsenders 15 und zum Ermitteln einer Laufzeit der von dem Detektor 50 nachgewiesenen Lichtpulse und zum Bestimmen eines Objektabstands eines Objekts relativ zu dem optischen Scanner 100 aufgrund der Laufzeit von bei einer bestimmten Drehstellung ϕ des Sendelichtstrahls 30 nachgewiesenen Lichtpulsen.

Schließlich ist auf dem Rotor 20 ein verschwenkbarer mikromechanischer Spiegel 40 angeordnet, über den der Sendelichtstrahl 30 in den Überwachungsbereich 70 geleitet wird. Der mikromechanische Spiegel 40 dient zum Variieren eines Winkels θ des Sendelichtstrahls relativ zur Drehachse 17 des Rotors 20. In Figur 1 sind beispielhaft drei Sendestrahlen 31, 32, 33 zu unterschiedlichen Zeitpunkten gezeigt, die jeweils in einem unterschiedlichen Winkel θ relativ zur Drehachse 17 ausgerichtet sind.

Die Steuer- und Auswerteeinheit 60 ist zum Auslesen einer Winkelstellung θ des mikromechanischen Spiegels 40 eingerichtet. Die Steuer- und Auswerteeinheit 60 kann beispielsweise durch einen programmierbaren Mikrocontroller oder eine vergleichbare Komponente, beispielsweise einen FPGA, verwirklicht sein.

Zum Antreiben des Rotors 20 ist ein Antrieb 16, typischerweise ein Elektromotor vorhanden.

Die Drehachse 17 verläuft in Figur 1 kollinear mit der z-Achse, siehe in Figur 1 eingezeichnetes Koordinatensystem 11.

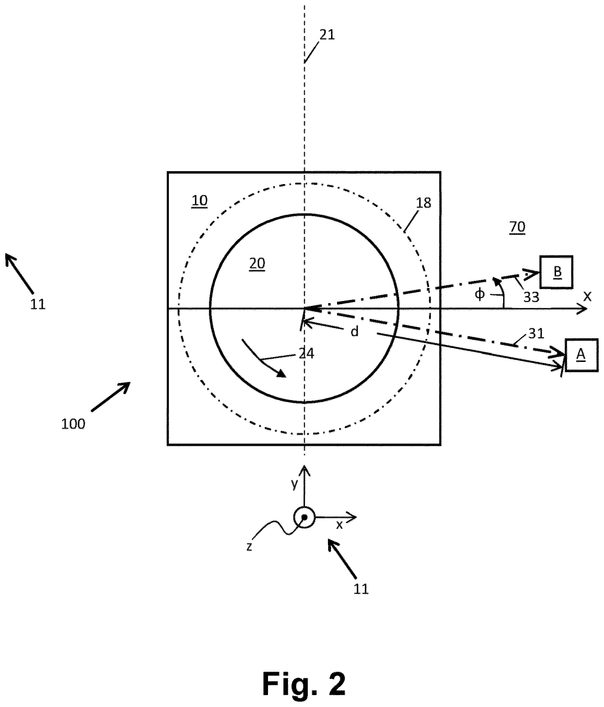

Der Winkel ϕ, um welchen der Rotor 20 und damit der Sendelichtstrahl 33 relativ zur x-Achse des Koordinatensystems 11 verdreht ist, kann als Azimutalwinkel ϕ bezeichnet werden, siehe Figur 2. Der Winkel θ, um welchen der Sendestrahl 31, 32, 33 relativ zur z-Achse des Koordinatensystems 11 verkippt ist, kann als Polarwinkel θ bezeichnet werden.

Figur 2 zeigt den optischen Scanner 100 aus Figur 1 in einer schematischen Ansicht von oben, also in Richtung der negativen z- Achse des Koordinatensystems 11. Es sind die Sendestrahlen 31 und 33 gezeigt, die wegen einer unterschiedlichen Drehstellung des Rotors 20 einen unterschiedlichen Winkel ϕ relativ zur x-Achse einnehmen. Das Koordinatensystem 11 in Figur 2 entspricht demjenigen der Figur 1. Beispielhaft gezeigt ist in Figur 2 auch ein Abstand d zum Objekt A.

Im Messbetrieb wird der Rotor 20 in einer Umlaufrichtung 24 relativ zu dem Stator 10 gedreht, sodass der Sendelichtstrahl 31, 32, 33 kontinuierlich um die Achse 17 gedreht wird. Dabei ändert sich der Azimutalwinkel ϕ kontinuierlich.

In dem in den Figuren 1 und 2 dargestellten Ausführungsbeispiel ist der mikromechanische Spiegel 40 auf der Drehachse 17 montiert und eine Achse 21 des mikromechanischen Spiegels 40 verläuft senkrecht zur Drehachse 17 und schneidet diese. Der Lichtsender 15 ist so montiert, dass die Senderichtung 30 koaxial zur Drehachse 17 des Rotors verläuft.

Der mikromechanische Spiegel 40 ist außerdem so angeordnet, dass zu beiden Seiten der Drehebene, also einer Ebene, die durch die Achse 21 des mikromechanischen Spiegels verläuft und senkrecht zur Drehachse 17 des Rotors orientiert ist, dieselbe Auslenkung des Spiegels 40 möglich ist. Der maximale Winkelhub Δθmax des Polarwinkels θ ist also symmetrisch zur Drehachse 17 ausgerichtet.

Zum optischen Trennen der Sendeseite und der Empfangsseite ist eine nichttransparente Platte 54 auf dem Rotor 20 montiert, die zwischen dem Lichtsender 15 und dem Lichtdetektor 50 angeordnet ist. Diese Platte 54 dient dazu, möglichst zu verhindern, dass Streulicht von der Sendeseite auf den Detektor 50 gelangt.

Zum Bündeln von Licht 42, welches aus dem Überwachungsbereich 70 zurückgestrahlt wird, ist eine Sammellinse 52 vorhanden, welche aus dem Überwachungsbereich 70 zurückgestrahltes Licht 42 auf den Detektor 50 bündelt.

Der Lichtsender 15, der mikromechanische Spiegel 40, und der Detektor 50 können in einem hier nicht dargestellten Kunststoffformteil aufgenommen sein, an dem auch die Platte 54 angeformt sein kann. Es ist auch möglich, dass die Linse 52 in dem Kunststoffformteil aufgenommen ist oder durch dieses gebildet ist.

Die Komponenten des optischen Scanners 100 aus Figur 1 sind in einem Gehäuse aufgenommen, welches ein für das Sendelicht 30 und das Licht des Pilotlasers 12 transparentes umlaufendes Fenster 18 aufweist.

Schließlich ist bei dem optischen Scanner 100 aus Figur 1 ein Pilotlaser 12 vorhanden, der im sichtbaren Bereich emittiert und über einen Strahlteiler 13, beispielsweise einen Farbteiler oder einen dichroitischen Strahlteiler, in den Sendestrahlengang eingekoppelt wird. Der Strahlengang des Pilotlasers 12 verläuft im Überwachungsbereich 70 kollinear mit dem Strahlengang des Sendelichts 30.

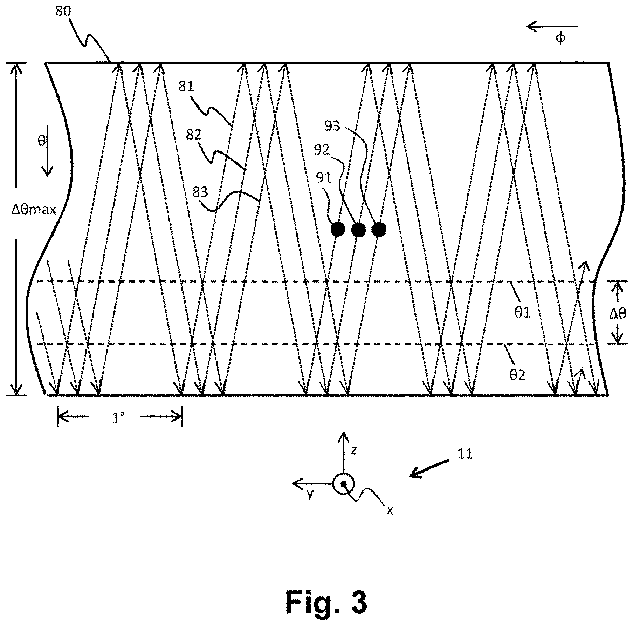

Der Pilotlaser 12 dient dazu, auf Objekten im Überwachungsbereich Symbole, beispielsweise Buchstaben oder Ziffern, optisch anzuzeigen. Dieses wird im Zusammenhang mit Figur 3 näher erläutert.

Figur 3 zeigt einen Ausschnitt 80 des Überwachungsbereichs über einen Teilbereich von etwa 5° des maximalen Winkelbereichs des Azimutalwinkels ϕ von 360°. Mit dem Spiegel 40 kann der Sendestrahl 30 über den Winkelbereich Δθmax verschwenkt werden. Beispielhaft sind drei Trajektorien 81, 82 und 83 eingezeichnet, die jeweils den Ort angeben, über welche der Sendelichtstrahl durch Drehen des Rotors 20 und durch Verschwenken des mikromechanischen Spiegels 40 bewegt wird. Im gezeigten Beispiel mögen die drei Trajektorien 81, 82 und 83 zu aufeinanderfolgenden Drehperioden des Rotors 20 gehören. Das bedeutet, dass in einem synchronisierten Betrieb und bei gleichen Abständen der folgenden Drehumläufe des Rotors, die Trajektorie nach vier weiteren Umdrehungen wieder auf der ersten Trajektorie 81 zu liegen kommt. Beispielhaft ist in Figur 3 ein Winkelintervall von 1° des Azimutalwinkels eingetragen. Daraus wird ersichtlich, dass die Ortsauflösung etwa 1/6° beträgt.

In einer Verfahrensvariante kann der mikromechanische Spiegel 40 dergestalt bewegt werden, dass der Sendestrahl 30 nur innerhalb des eingeschränkten Winkelintervalls Δθ hin und her bewegt wird. Wenn die Rate, mit welcher Lichtpulse ausgesendet werden, dabei nicht geändert wird, wird eine verbesserte Ortsauflösung erreicht. Das Intervall Δθ liegt, wie ersichtlich, nicht symmetrisch zu den Grenzen des maximal möglichen Winkelhubs Δθmax. Das Intervall Δθ kann beispielsweise vollständig unterhalb der Ebene liegen, in der die Drehachse des mikromechanischen Spiegels 40 liegt und die senkrecht auf der Drehachse des Rotors steht. Die Grenzen θ1 und θ2 des Winkelintervalls Δθ und dessen Lage kann bevorzugt aufgrund von Messdaten gewählt und eingestellt werden, die in einer ersten Verfahrensphase gewonnen wurden. Beispielsweise kann sich nach den Messdaten der ersten Verfahrensphase im Winkelintervall Δθ ein Objekt befinden, welches mit verbesserter Ortsauflösung vermessen werden soll.

Schließlich sind in Figur 3 drei Punkte 91, 92, 93 dargestellt, bei denen es sich um Punkte handeln soll, die jeweils zu dem Zeitpunkt, zu dem der Lichtstrahl diese Punkte durchläuft, mit dem Pilotlaser 12 beleuchtet werden. Wenn, nach der entsprechenden Anzahl von Umdrehungen des Rotors 20, hier beispielsweise nach sechs Umdrehungen, die Trajektorie wieder auf den Punkt 91 trifft, muss entsprechend der Pilotlaser 12 wieder aktiviert werden, sodass der Punkt 91 erneut beleuchtet wird. Damit eine für das menschliche Auge kontinuierliche optische Darstellung entsteht, muss die Frequenz mit der ein und derselbe Punkt, beispielsweise der Punkt 91 wiederholend beleuchtet wird, größer sein als die Flimmerfusionsfrequenz des menschlichen Auges, typischerweise also größer als einige 10 Hz. Wenn Buchstaben, Zeichen oder Symbole dargestellt werden sollen, können diese aus einzelnen Punkten zusammengesetzt werden. Für diesen Betrieb, bei dem mit dem Pilotlaser Symbole auf einem Objekt dargestellt werden sollen, sollte die Drehbewegung des Rotors 20 mit der Schwingungsbewegung des mikromechanischen Spiegels 40 synchronisiert werden.

Mit der vorliegenden Erfindung wird ein neuartiger optischer Scanner vorgestellt, der sich durch einen einfachen Aufbau und vielgestaltige Anwendungsmöglichkeiten auszeichnet.

### Bezugszeichenliste

- 10: Stator
- 11: Koordinatensystem
- 12: Pilotlaser
- 13: Strahlteiler, Farbteiler, dichroitischer Strahlteiler
- 15: Lichtsender
- 16: Drehantrieb
- 17: Drehachse, kollinear mit z-Achse
- 18: Gehäuse, Fenster in Gehäuse
- 20: Rotor
- 21: Achse des mikromechanischen Spiegels, parallel zur y-Achse
- 24: Umlaufrichtung des Sendestrahls
- 30: Sendelicht, Sendestrahl, Senderichtung, Sendelichtstrahl
- 31: Sendestrahl zu einem ersten Zeitpunkt t1 in Winkelposition θ₁, ϕ₁
- 32: Sendestrahl zu einem zweiten Zeitpunkt t2 in Winkelposition θ₂, ϕ₂
- 33: Sendestrahl zu einem dritten Zeitpunkt t3 in Winkelposition θ₃, ϕ₃
- 40: mikromechanischer Spiegel
- 42: von Objekt A, B zurückgestrahlte Lichtpulse
- 50: Detektor
- 52: Sammellinse
- 54: nichttransparente Trennplatte
- 60: Steuer- und Auswerteeinheit
- 70: Überwachungsbereich
- 80: Ausschnitt des Überwachungsbereichs
- 81: Trajektorie des Sendestrahls 30 im Ausschnitt 80 in einem ersten Umlauf des Rotors 20
- 82: Trajektorie des Sendestrahls 30 im Ausschnitt 80 in einem zweiten Umlauf des Rotors 20
- 83: Trajektorie des Sendestrahls 30 im Ausschnitt 80 in einem dritten Umlauf des Rotors 20
- 91: erster mit Pilotlaser beleuchteter Punkt
- 92: zweiter mit Pilotlaser beleuchteter Punkt
- 100: erfindungsgemäßer optischer Scanner
- A: Objekt im Überwachungsbereich
- B: Objekt im Überwachungsbereich
- x: x-Achse
- y: y-Achse
- z: z-Achse
- d: Abstand des Objekts A von dem optischen Scanner 100
- θ: Polarwinkel des Sendestrahls relativ zur Drehachse
- θ1: erste Grenze des Polarwinkelintervalls Δθ
- θ2: zweite Grenze des Polarwinkelintervalls Δθ
- θ₁: Polarwinkel des Sendestrahls 31 relativ zur Drehachse 12
- θ₂: Polarwinkel des Sendestrahls 32 relativ zur Drehachse 12
- θ₃: Polarwinkel des Sendestrahls 33 relativ zur Drehachse 12
- Δθ: Intervall des Polarwinkels, Abstand des Polarwinkels der Sendestrahlen 31 und 33
- Δθmax: maximales Intervall des Polarwinkels
- ϕ: Azimutalwinkel des Sendestrahls 31, 32, 33 relativ zur x-Achse
- ϕ₁: Azimutalwinkel des Sendestrahls 31 relativ zur x-Achse
- ϕ₂: Azimutalwinkel des Sendestrahls 32 relativ zur x-Achse
- ϕ₃: Azimutalwinkel des Sendestrahls 33 relativ zur x-Achse

## Patentansprüche

1. Optischer Scanner nach dem Laufzeitprinzip zum Nachweisen von Objekten in einem Überwachungsbereich
mit einem Lichtsender (15) zum Aussenden eines gepulsten Sendelichtstrahls (30) in den Überwachungsbereich (70),
mit einem Rotor (20), auf dem der Lichtsender (15) zum Drehen des Sendelichtstrahls (30) angeordnet ist,
mit einem Stator (10) relativ zu dem der Rotor um eine Drehachse (17) drehbar ist,
mit einem auf dem Rotor (20) angeordneten Detektor (50) zum Nachweisen von von einem Objekt (A) im Überwachungsbereich (70) zurückgestrahlten Lichtpulsen (42) und
mit einer Steuer- und Auswerteeinheit (60), die eingerichtet ist zum Ansteuern des Lichtsenders (30), zum Ermitteln einer Laufzeit von von dem Detektor (50) nachgewiesenen Lichtpulsen und zum Bestimmen eines Objektabstands (d) des Objekts (A) relativ zu dem optischen Scanner (100) aufgrund der Laufzeit von bei einer bestimmten Drehstellung (ϕ) des Sendelichtstrahls (30) nachgewiesenen Lichtpulsen,
**dadurch gekennzeichnet,**
**dass** auf dem Rotor (20) ein verschwenkbarer mikromechanischer Spiegel (40) angeordnet ist, über den der Sendelichtstrahl (30) in den Überwachungsbereich (70) geleitet wird,
**dass** der mikromechanische Spiegel (40) zum Variieren eines Winkels (θ) des Sendelichtstrahls (31, 32, 33) relativ zu der Drehachse (17) des Rotors (20) eingerichtet ist und
**dass** die Steuer- und Auswerteeinheit (60) zum Auslesen einer Winkelstellung (θ) des mikromechanischen Spiegels (40) eingerichtet ist.

2. Optischer Scanner nach Anspruch 1,
**dadurch gekennzeichnet,**
**dass** der Sendelichtstrahl (31, 32, 33) durch den mikromechanischen Spiegel (40) über einen Winkelhub (Δθ) von 30°, insbesondere von 40°, besonders bevorzugt von 50° oder mehr verschwenkbar ist.

3. Optischer Scanner nach Anspruch 1 oder 2,
**dadurch gekennzeichnet,**
**dass** eine Bewegung des mikromechanischen Spiegels (40) mit der Rotation des Rotors (20) nicht synchronisiert ist.

4. Optischer Scanner nach einem der Ansprüche 1 bis 3,
**dadurch gekennzeichnet,**
**dass** eine Schwingungsfrequenz des mikromechanischen Spiegels (40) um einen Faktor 10 bis 1000, insbesondere um einen Faktor 20 bis 500 und besonders bevorzugt um einen Faktor 40 bis 200, größer ist als eine Umlauffrequenz des Rotors (20).

5. Optischer Scanner nach einem der Ansprüche 1 bis 4,
**dadurch gekennzeichnet,**
**dass** der mikromechanische Spiegel (40) auf der Drehachse (17) des Rotors (20) montiert ist.

6. Optischer Scanner nach einem der Ansprüche 1 bis 5,
**dadurch gekennzeichnet,**
**dass** der Rotor (20) zum kontinuierlichen Drehen um den Stator (10) eingerichtet ist.

7. Optischer Scanner nach einem der Ansprüche 1 bis 6,
**dadurch gekennzeichnet,**
**dass** die Drehachse (21) des verschwenkbaren Spiegels (40) senkrecht zur Drehachse (17) des Rotors (20) orientiert ist.

8. Optischer Scanner nach einem der Ansprüche 1 bis 7,
**dadurch gekennzeichnet,**
**dass** zum optischen Trennen eines Sendestrahlengangs und eines Detektionsstrahlengangs eine für das Sendelicht (30) undurchlässige Platte (54) vorhanden ist, die zwischen dem Lichtsender (15) und dem Detektor (50) angeordnet ist.

9. Optischer Scanner nach einem der Ansprüche 1 bis 8,
**dadurch gekennzeichnet,**
**dass** der Lichtsender (15), der Detektor (50) und der mikromechanische Spiegel (40) in einem Kunststoffformteil aufgenommen sind und/oder dass die undurchlässige Platte (54) an dem Kunststoffformteil angeformt ist.

10. Optischer Scanner nach Anspruch 9,
**dadurch gekennzeichnet,**
**dass** eine lichtsammelnde Optik (52) in dem Kunststoffformteil aufgenommen oder durch das Kunststoffformteil gebildet ist.

11. Optischer Scanner nach einem der Ansprüche 1 bis 10,
**dadurch gekennzeichnet,**
**dass** zum optischen Darstellen von Information auf einem Objekt (A) im Überwachungsbereich (70, 80) ein Pilotlaser (12) vorhanden ist, der im sichtbaren Bereich emittiert.

12. Optischer Scanner nach Anspruch 11,
**dadurch gekennzeichnet,**
**dass** das Licht des Pilotlasers (12) ebenfalls über den mikromechanischen Spiegel (40) oder einen weiteren verschwenkbaren, insbesondere mikromechanischen, Spiegel, der separat ansteuerbar ist, in den Überwachungsbereich gestrahlt wird.

13. Optischer Scanner nach einem der Ansprüche 11 oder 12,
**dadurch gekennzeichnet,**
**dass** die Steuer- und Auswerteeinheit (60) dazu eingerichtet ist, durch geeignete zeitliche Ansteuerung des Pilotlasers (12) Symbole, insbesondere Schriftzeichen und Ziffern, auf einem Objekt (A, B) im Überwachungsbereich zu generieren.

14. Verfahren zum Nachweisen von Objekten in einem Überwachungsbereich mit einem optischen Scanner, insbesondere nach einem der Ansprüche 1 bis 13,
bei dem ein gepulster Sendelichtstrahl (30) in den Überwachungsbereich (70) gestrahlt und von einem Objekt (A) im Überwachungsbereich (70) zurückgestrahlte Lichtpulse (42) nachgewiesen werden,
bei dem eine Senderichtung des Sendelichtstrahls (30), insbesondere kontinuierlich, um eine Drehachse (17) verschwenkt wird,
bei dem eine Laufzeit von nachgewiesenen Lichtpulsen ermittelt und aus der Laufzeit von Lichtpulsen, die bei einer momentanen Drehstellung (ϕ) des Sendelichtstrahls (30) nachgewiesen werden, ein Objektabstand (d) des Objekts (A) im Überwachungsbereich (70) relativ zu dem optischen Scanner (100) bestimmt wird,
**dadurch gekennzeichnet,**
**dass** die Richtung des Sendelichtstrahls (30) relativ zur Drehachse (17) mit einem mikromechanischen Spiegel (40), über den der Sendelichtstrahl (30) in den Überwachungsbereich (70) geleitet wird, verschwenkt wird und
**dass** ein momentaner Winkel (θ) des Sendelichtstrahls (30) relativ zur Drehachse (17) ausgelesen und dem Objektabstand (d) und der Drehstellung (ϕ) des Sendelichtstrahls (30) zugeordnet wird.

15. Verfahren nach Anspruch 14,
**dadurch gekennzeichnet,**
**dass** mehrere Abstandsmessungen pro Takt durchgeführt werden und
**dass** ein Mittelwert der aus den Abstandsmessungen ermittelten Objektabstände gebildet und abgespeichert wird.

16. Verfahren nach einem der Ansprüche 14 oder 15,
**dadurch gekennzeichnet,**
**dass** ein Intervall (Δθ) der Winkel, über den der mikromechanische Spiegel (40) hin und her verschwenkt wird, mindestens phasenweise kleiner ist als ein maximal möglicher Winkelhub (Δθmax) des mikromechanischen Spiegels (40) und
**dass** eine Lage dieses Intervalls (Δθ) innerhalb des maximal möglichen Winkelhubs (Δθmax) eingestellt wird.

17. Verfahren nach Anspruch 16,
**dadurch gekennzeichnet,**
**dass** in einer ersten Verfahrensphase das Intervall (Δθmax) auf einen ersten Wert eingestellt wird und
**dass** in einer zweiten Verfahrensphase das Intervall (Δθ) auf einen zweiten Wert eingestellt wird, der kleiner ist als der erste Wert.

18. Verfahren nach Anspruch 17,
**dadurch gekennzeichnet,**
**dass** die Größe des Intervalls (Δθ) in der zweiten Verfahrensphase und die Lage dieses Intervalls (Δθ) innerhalb des maximal möglichen Winkelhubs (Δθmax) in Abhängigkeit von Messdaten des optischen Scanners (100) eingestellt werden, die in der ersten Verfahrensphase gewonnen werden.

19. Verfahren nach einem der Ansprüche 14 bis 18,
**dadurch gekennzeichnet,**
**dass** zum optischen Darstellen von Symbolen auf einem Objekt (A) im Überwachungsbereich (70) ein Pilotlaser zu geeigneten Zeitpunkten angesteuert wird.

20. Verfahren nach Anspruch 19,
**dadurch gekennzeichnet,**
**dass** auf dem Objekt (A) im Überwachungsbereich mit dem Pilotlaser (12) Bereiche für einen Benutzer signalisiert werden, die von dem optischen Scanner (100) zu dessen Steuerung über Gesten des Benutzers,
insbesondere mit einer Hand des Benutzers, überwacht werden.

21. Verfahren nach Anspruch 19 oder 20,
**dadurch gekennzeichnet,**
**dass** mit dem Pilotlaser (12) Bereiche auf dem Objekt (12) signalisiert werden, in denen Messdaten des optischen Scanners (100) von Erwartungswerten abweichen.
